# EUROPÄISCHE PATENTANMELDUNG

(11) **EP 2 601 868 A2**
(43) Veröffentlichungstag der Anmeldung: **12.06.2013**
(21) Anmeldenummer: 12196202.1
(22) Anmeldetag: 08.12.2012
(51) Int. Cl.: A47H 1/022, A47H 1/122, F16B 2/24

(54) **Klemmvorrichtung mit Klemmkopf zum Anhängen von funktionellem Ab-deckmaterial an Fenster oder Türen und Fenster oder Tür mit der Klemmvorrichtung**

(30) Priorität: 09.12.2011 DE 202011108868 U
(71) Anmelder: Iversen, Hans, 8920 Randers NV (DK)
(72) Erfinder: Iversen, Hans, 8920 Randers NV (DK)
(74) Vertreter: Müller Schupfner & Partner

(57) **Zusammenfassung**

Gegenstand der Erfindung ist eine Klemmvorrichtung mit Klemmkopf für Holme von Fenstern oder dergleichen zum Anhängen von funktionellem Abdeckmaterial an Fenster oder Türen, wie Vorhänge, Gardinen, Sonnen- oder Blickschutzeinrichtungen aufweisend zumindest einem bügelartigen Klemmkopf und eine an dem zumindest einem Klemmkopf befestigte Tragstange, die das Fenster überspannt.

## Beschreibung

Die Erfindung betrifft eine Klemmvorrichtung mit Klemmkopf für Holme von Fenstern oder Türen zum Anhängen von funktionellem Abdeckmaterial an Fenster oder Türen, wie Vorhänge, Gardinen, Sonnen- oder Blickschutzeinrichtungen.

Es ist bekannt, zum Sichtschutz an Fenster- und Türflächen Abdeckmaterial, wie Vorhänge, Gardinen, Sonnen- oder Blickschutzeinrichtungen anzubringen. Bei Fenstern oder Türen aus Holz kann das auf einfache Weise mittels Haken erfolgen, die in das Holz eingeschraubt werden. Bei Fenstern und Türen aus Kunststoff ist das nicht möglich. In diesem Fall können Haken angeklebt oder in Dichtungen eingesteckt werden. Die Tragfähigkeit solcher Anbringungen ist aber begrenzt.

Halterungen für sogenannte Kaffehausgarnituren sind z.B. aus der DE 29608151 U1, der DE 202005007376 U1 und der DE 202005013937 U1 bekannt.

Es ist Aufgabe der Erfindung, eine Anbringungsmöglichkeit für funktionelles Abhängmaterial an Profilen von Fenstern und Türen zu schaffen, die eine gute Tragfähigkeit für Abhängmaterial schafft, leicht montierbar und vielseitig ist.

Die gestellte Aufgabe ist erfindungsgemäß durch den Gegenstand der unabhängigen Ansprüche gelöst. Vorteilhafte Ausgestaltungen sind Gegenstand der Unteransprüche oder nachfolgend beschrieben.

Klemmköpfe, die von außen an gegenüberliegende Profile ansetzbar sind, lassen sich schnell und problemlos aufstecken; sie behindern die Fensterdichtungen nicht und sitzen außerordentlich fest. Zwischen den Klemmköpfen ist eine vorzugsweise ausziehbare Tragstange einfach und sicher angebracht, etwa indem dem Tragstangenprofil angepasste Enden aufgesetzt werden, die in oder durch Befestigungselemente an den Klemmköpfen greifen und die Tragstange festlegen. Die Tragstange überspannt zumindest einen Teil des Fensters.

Der Klemmkopf weist einen Tragschenkel, einen Greifschenkel und einen Rückenschenkel auf, der hinter die Rückseite der Profile greift.

Der Tragschenkel liegt vorzugsweise flach auf den Vorderseiten der Profile auf und ist mit zumindest einem Befestigungselement für das Anbringen von einer Tragstange versehen. Tragschenkel, Greifschenkel und Rückenschenkel bilden vorzugsweise ein "U", wobei der Greifschenkel die Schenkel des "U's", Tragschenkel und Rückenschenkel, vorzugsweise in gerade Linie, verbindet. Der Tragschenkel ist in der Regel länger als der Rückenschenkel.

Die Rückenschenkel halten die Klemmköpfe von hinten fest. Die Tragschenkel halten die Klemmköpfe von vorn fest und dienen gleichzeitig als Stangenhalterungen. Der Greifschenkel verbindet Tragschenkel und Rückenschenkel. Vorzugsweise sind Tragschenkel, Greifschenkel und Rückenschenkel jeweils aus einem flächigen Material, insbesondere Stahl oder Aluminium, gefertigt und stehen in einem Winkel von etwa 90° (z.B. plus / minus 10°) zueinander. Sie können aus einem Stück eines flachen Materials, etwa eines Metallstreifen, durch Abkanten gefertigt sein. An dem Tragschenkel ist ein Federarm vorgesehen, der in aufgesetzter Stellung gegen das Profil drückt. Solche Federarme sichern auch bei unvermeidlichen Toleranzen in den Profilbreiten immer einen guten Halt.

Nach einer weiteren Ausgestaltung der Erfindung ist vorgesehen, dass der Rückenschenkel an seinen freien Enden mit einer auf das Profil zuweisenden Beißabkröpfung versehen ist. Diese Beißabkröpfungen beißen sich an den Profilen, insbesondere in eine Gummiauflage an den Profilen, fest. Rückenschenkel und Beißabkröpfung bilden einen Winkel von vorzugsweise 90° bis 160°, insbesondere 120° bis 150°.

Nach einer weiteren Ausgestaltung der Erfindung ist vorgesehen, dass der Tragschenkel an der Vorderseite mit einer nach vorn abstehenden Tragwanne versehen ist, in die die Enden der Tragstange einlegbar sind. Die Tragwanne kann einen Auflageboden für die Endbereiche der Tragstange und vorn hochstehende Haltewangen aufweisen, durch die Sicherungsschrauben gegen die Enden der Tragstange setzbar sind.

Nach einer weiteren Ausgestaltung der Erfindung ist vorgesehen, dass der Tragschenkel eine vom Profil wegweisende Haltelasche aufweist, in der das Ende einer Tragstange einsetzbar ist.

Nach einer weiteren Ausgestaltung der Erfindung ist vorgesehen, dass das Tragstangenende an den Haltelaschen mittels eines Montagezapfen befestigt ist, der mit einem Schraub- oder Quetschbolzen durch die Durchbrechung in der Haltelasche hindurch in das Haltestangenende greift.

Nach einer weiteren Ausgestaltung der Erfindung ist vorgesehen, dass die Haltelasche einen in den Halteraum der Tragstange weisenden Einspannzapfen aufweist, auf die ein Tragstangenende aufschiebbar ist.

Nach einer weiteren Ausgestaltung der Erfindung ist vorgesehen, dass die Tragstange sich aus zusammen- und/oder auseinanderschiebbaren Teilstangen zusammensetzt, vorzugsweise gegen eine Federspannung.

Es ist möglich, dass ein Klemmkopf fest mit der Tragstange verbunden ist oder einer der beiden Klemmköpfe keinen Federarm und/oder keinen Rückenschenkel aufweist, letzteres insbesondere dann, wenn die Klemmköpfe aufeinander zu auf Spannung gehalten werden, z.B. mittels der Tragstange und einer Federspannung oder über andere elastische Elemente in oder an der Tragstange.

Die Erfindung wird anhand der Zeichnungen näher erläutert. Es zeigen:
Fig. 1 im horizontalen Schnitt vertikale Profile von zueinander gehörigen Vertikalholmen eines Fensters oder einer Tür mit einer eingesetzten Fenster- oder Türscheibe, wobei auf beide Profile von außen her Klemmköpfe mittels einer leichten Drehbewegung aufgeschoben sind, die an der Vorderseite Tragwannen aufweisen, in die eine Tragstange für an ihr abzuhängende Vorhänge, Gardinen, Sonnen- oder Blickschutzeinrichtungen eingelegt sind,
Fig. 2 den horizontalen Schnitt nach Fig. 1, wobei anstelle der Tragwannen an den Klemmköpfen nach vorn vorstehende Traglaschen vorgesehen sind, zwischen denen mittels Montagezapfen eine Tragstange befestigt ist,
Fig. 3 den horizontalen Schnitt nach Fig. 1, wobei anstelle der Tragwannen an den Klemmköpfen nach vorn vorstehende Traglaschen (d.h. vom Profil weg) vorgesehen sind, die in den Halteraum der Tragstangen weisende Einspannzapfen aufweisen, auf die die Tragstangenenden aufgeschoben sind.

In Fig. 4 ist der Klemmkopf aus Figur 2 zur besseren Anschaulichkeit einzeln dargestellt, ohne das Holmprofil eines Fensters oder einer Tür oder die Tragstange. Im entspannten Zustand ist der Federarm gut sichtbar.

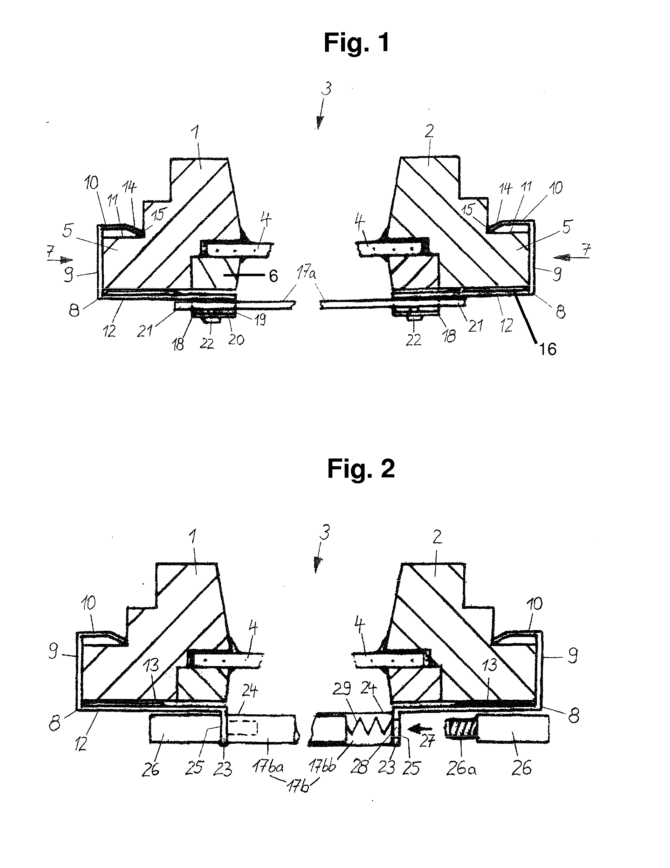

Fig. 1 zeigt im horizontalen Schnitt zwei zueinander gehörige Profile als Holme 1, 2 eines Fensters oder einer Tür 3. In die Profile der Holme von Fenster oder Tür ist eine Glasscheibe 4 eingesetzt. Die dargestellten Profile 1, 2 sind nur Beispielprofile. Von den verwendeten Profilen sind für die Erfindung nur die nach außen vorstehenden Abschlussstege 5 und die Vorderseiten 13 der Profile 1, 2 von Bedeutung. Die Abschlussstege 5 liegen am nicht dargestellten Fenster oder Türrahmen an. Setzleisten 6 legen die Glasscheibe 4 in den Profilen 1, 2 mit Dichtungen fest.

Von außen her sind auf die Profile in Richtung von Pfeilen 7 Klemmköpfe 8 aufgeklinkt. Die Klemmköpfe 8 weisen jeweils einen Tragschenkel 12, einen Greifschenkel 9 und einen Rückenschenkel 10 auf, der hinter die Rückseite 11 der Profile 1, 2 greift und auf diese drückt. Die vordere Schenkel ist der Tragschenkel 12, der an den Vorderseiten 13 gegen die Profile 1, 2 drückt. Der Rückenschenkel 10 hält die Klemmköpfe 8 von hinten fest. Dies wird noch dadurch verstärkt, dass der Rückenschenkel 10 an seinem Ende mit einer auf die Profile 1, 2 zuweisenden Beißabkröpfung 14 versehen ist. Diese Beißabkröpfung 14 beißt sich mit ihrem freien Ende 15 an den Profilen 1, 2 fest, weshalb die Klemmköpfe 8 besonders gut gegen abrutschen gesichert sind.

Eine weitere Sicherheit gegen ein Abrutschen bieten an den Tragschenkeln 12 vorgesehene Federarme 16, die in aufgesetzter Stellung gegen die Profile 1, 2 drücken und der auf der Innenseite des Tragschenkels 12, z.B. aus Federstahl, angebracht ist. Das freie Ende des Federarms 16 läuft in dem Raum zwischen Greifschenkel 9, Rückenschenkel 10 und Tragschenkel 12 aus, bezogen auf eine Länge des Tragschenkels 12, gerechnet von der Abkantung Tragschenkel 12 /Greifschenkel 9, die der Länge des Rückenschenkels 10 entspricht. Das andere Ende des Federarms liegt ausserhalb dieses Raums.

Die Tragschenkel 12 können auf verschiedene Weise zum Anbringen der Tragstange 17 ausgebildet werden. Im Folgenden werden Beispielsvarianten mit Tragstangen 17a, 17b und 17c beschrieben.

In Fig. 1 sind an den Tragschenkeln 12 nach vorn abstehende U-förmige Tragwannen 18 für die Enden 21 der Tragstange 17a angeschnitten. Die U-förmigen Tragwannen 18 haben Auflageböden 19 für die Tragstange 17a und vorn hochstehende Haltewangen 20. Die Enden 21 der Tragstange 17a liegen dann in den Tragwannen 18. Die Tragstange 17a erstreckt sich von Profil 1, 2 zu Profil 1, 2. Um eine größere Sicherheit gewährleisten zu können, sind durch die Haltewangen 20 Sicherungsschrauben 22 in Form von Madenschrauben geführt, die gegen die Enden 21 der Tragstange 17a drücken.

In Fig. 2 ist ein Ausführungsbeispiel beschrieben, bei dem von den Tragschenkeln 12 Haltelaschen 23 nach vorn abstehen. Die Tragstange 17b dieses Ausführungsbeispiels stößt mit ihren Enden 24 gegen die Haltelaschen 23.

Auf der rechten Seite der Fig. 2 ist die Anbringung der Tragstange 17b dargestellt. Von der Gegenseite 25 wird ein Montagezapfen 26 mit einem Schraub- oder Quetschbolzen 26a in Richtung eines Pfeiles 27 durch eine Durchbrechung 28 in der Haltelasche 23 in das Ende 24 der Tragstange 17b eingeschraubt oder eingeschoben. Auf der linken Seite der Fig. 2 ist die Montage abgeschlossen. Die Tragstange 17b ist zwischen den Haltelaschen 23 festgelegt. Die Tragstange 17b besteht vorzugsweise aus zwei ineinander verschiebbaren Stangenteilen 17ba und 17bb, die mittels einer Expansionsfeder 29 auseinander oder vorzugsweise zusammengedrückt werden. Die Tragstange 17b hat damit bei geeignetem Zusammenschieben ohne Zuschneiden immer die richtige Länge zwischen den Haltelaschen 23.

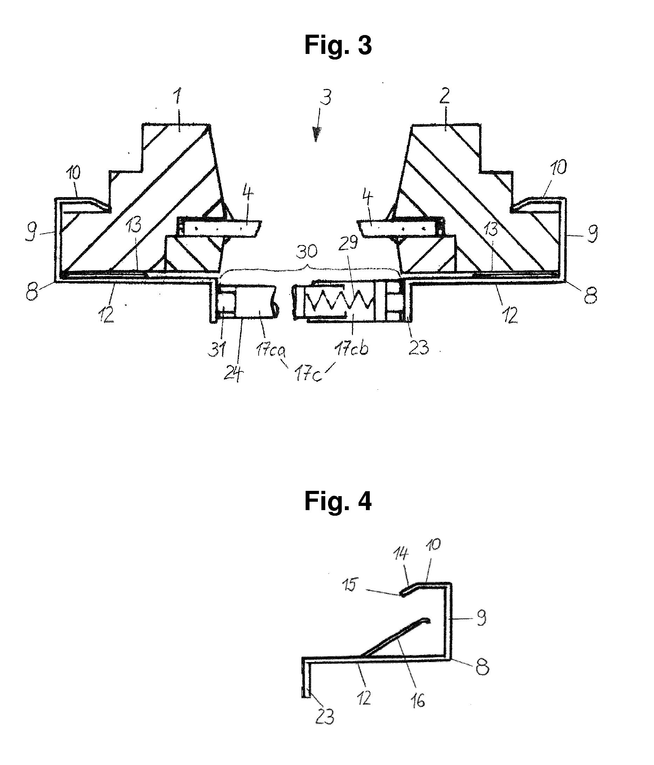

In Fig. 3 sind von den Tragschenkeln 12 ebenfalls Haltelaschen 23 abgebogen. An den Haltelaschen 23 sind in den Halteraum 30 hineinragende Einspannzapfen 31 vorgesehen. Die Einspannzapfen 31 können beispielsweise auch aus den Haltelaschen 23 ausgedrückt sein. Die dabei zum Einsatz kommende Tragstange 17c entspricht der Tragstange 17b nach Fig. 2. Die Tragstange 17c besteht damit aus zwei ineinander verschiebbaren Stangenteilen 17ca und 17cb, die mittels der Expansionsfeder 29 auseinander gedrückt werden. Zur Montage werden die Stangenteile 17ca und 17cb ein wenig ineinander gedrückt und auf den Einspannzapfen 31 losgelassen. Auch die Tragstange 17c hat damit ohne Zuschneiden immer die richtige Länge zwischen den Haltelaschen 23 und setzt sich selbst fest.

Für jede der obigen Ausführungsformen ist es auch möglich, die Tragstange 17a, 17b aus zwei oder mehr Stangenteilen 17ba, 17bb und 17ca, 17cb zu bilden, die ineinander und auseinander schiebbar sind. Wenn gewünscht können diese durch ein zusätzliches Gewinde und ein gegenseitigen Verdrehen auf eine bestimmte Länge festgelegt sein.

### Bezugszeichenliste:

- 1: Profil des Holms links
- 2: Profil des Holms rechts
- 3: Fenster oder Tür
- 4: Glasscheibe
- 5: Abschlusssteg
- 6: Setzleiste
- 7: Pfeil
- 8: Klemmköpfe
- 9: Greifschenkel
- 10: Rückenschenkel
- 11: Rückseite der Holmprofile
- 12: Tragschenkel
- 13: Vorderseite der Holmprofile
- 14: Beißabkröpfung
- 15: Freies Ende der Beißabkröpfung
- 16: Federarm
- 17: Tragstange 17a, 17b, 17c und Stangenteile 17ba, 17bb, 17ca, 17cb
- 18: Tragwanne an den Tragschenkeln
- 19: Auflageboden der Tragwanne
- 20: Haltewange an den Vorderseiten des Auflagebodens
- 21: Enden der Tragstange 17a
- 22: Sicherungsschraube
- 23: Haltelasche an dem Tragschenkel
- 24: Ende der Tragstange 17b und 17c
- 25: Gegenseite (Ansetzseite des Montagezapfens 26)
- 26: Montagezapfen
- 26a: Schraub- oder Quetschbolzen am Montagezapfen
- 27: Pfeil
- 28: Durchbrechung in der Haltelasche 23
- 29: Expansionsfeder
- 30: Halteraum der Tragstange
- 31: Einspannzapfen an der Haltelasche

## Patentansprüche

1. Klemmvorrichtung zum Anhängen von funktionellem Abdeckmaterial, wie Vorhänge, Gardinen, Sonnen- oder Blickschutzeinrichtungen, an Profile (1, 2) von Fenster- oder Türholmen, aufweisend
a) zumindest einen Klemmkopf, wobei der Klemmkopf einen Tragschenkel (12) aufweist, der mit einer Abkantung in einen Greifschenkel (9) und der Greifschenkel (9) mit einer weiteren Abkantung in einen Rückenschenkel (10) übergeht, wobei
● der Rückenschenkel (10) hinter die Rückseite (11) des Profils (1, 2) eingreifbar ausgebildet ist, und der Tragschenkel (12) auf der Vorderseite (13) des Profils (1, 2) zumindest teilweise anlegbar ausgebildet ist,
● der Tragschenkel (12) von dem vom Profil weg abstehend mit zumindest einem Befestigungselement (18, 23, 26) und in Richtung auf das Profil (1,2) zu abstehend mit einem Federarm (16) vorsehen ist, wobei das freie Ende des Federarms - in auf das Profil (1,2) aufgesetzter Stellung - gegen das Profil (1, 2) drückt und sich in entlasteter Stellung in Richtung auf den Rückenschenkel (10) erstreckt, und
b) eine Tragstange (17), die in/mit dem/den Befestigungselement(en) gehaltert ist.

2. Klemmvorrichtung nach Anspruch 1, **dadurch gekennzeichnet, dass** der Rückenschenkel (10) an seinem freien Ende (14), insbesondere über eine weitere Abkantung, mit einer auf das Profil (1, 2) winkelig zuweisenden Beißabkröpfung (15) versehen ist.

3. Klemmvorrichtung nach zumindest einem der vorhergehenden Ansprüche, **dadurch gekennzeichnet, dass** das Befestigungselement eine vom Profil (1, 2) weg abstehende Tragwanne (18) ist, in die das Ende (21) der Tragstange (17a) einlegbar ist.

4. Klemmvorrichtung nach Anspruch 3, **dadurch gekennzeichnet, dass** die Tragwanne (18) einen Auflageboden (19) für das Ende (21) einer Tragstange (17a) und eine vom Profil (1, 2) weg abstehende Haltewange (20) aufweist, durch die vorzugsweise Sicherungsschrauben (22) gegen die Enden (21) der Tragstange (17a) setzbar sind.

5. Klemmvorrichtung nach zumindest einem der vorhergehenden Ansprüche 1 oder 2, **dadurch gekennzeichnet, dass** der Tragschenkel (12) zumindest eine Haltelasche (23) mit einer Durchbrechung (28) als Befestigungselement aufweist, mittels der die Tragstange (17) einspannbar ist, wobei die Haltelasche (23) vorzugsweise etwa rechtwinkelig von dem Tragschenkel (12) absteht.

6. Klemmvorrichtung nach zumindest einem der Ansprüche 1 oder 2, **dadurch gekennzeichnet, dass** das Befestigungselement eine Haltelasche (23) ist und in den Halteraum (30) der Tragstange (17c) weisende Einspannzapfen (31) aufweist, auf die ein Tragstangenende (24) aufschiebbar oder aufschraubbar ist, wobei die Haltelasche (23) vorzugsweise etwa rechtwinkelig von dem Tragschenkel (12) absteht.

7. Klemmvorrichtung nach zumindest einem der vorhergehenden Ansprüche, **dadurch gekennzeichnet, dass** das freie Ende des Federarms (16) in dem Raum zwischen Greifschenkel (9), Rückenschenkel (10) und Tragschenkel (12) ausläuft, bezogen auf eine Länge des Tragschenkels (12), gerechnet von der Abkantung Tragschenkel (12) / Greifschenkel (9), die der Länge des Rückenschenkels (10) entspricht, wobei das andere Ende des Federarms vorzugsweise außerhalb dieses Raums am Tragschenkel ansetzt.

8. Klemmvorrichtung nach zumindest einem der vorhergehenden Ansprüche aufweisend zwei Klemmköpfe gemäß zumindest einem der vorherigen Ansprüche und zwar jeweils auf beiden Seiten der Tragstange (17).

9. Klemmvorrichtung nach zumindest einem der vorhergehenden Ansprüche, **dadurch gekennzeichnet, dass** das Tragstangenende (24) an den Haltelaschen (23)
- mittels Montagezapfen (26) befestigt ist, die mit Schraub- oder Quetschbolzen (26a) durch die Durchbrechung (28) in den Haltelaschen (23) hindurchgreifen und in die Haltestangenenden (24) eingreifen oder die Tragstangenende (24) Schraub- oder Quetschbolzen (26a) aufweisen, die durch die Durchbrechung (28) in den Haltelaschen (23) hindurchgreifen und in die Montagezapfen (26) eingreifen, oder
- in eine Haltewange (20) eingreift, vorzugsweise mit einer Einschnürung im Bereich des Tragstangenendes (24).

10. Klemmvorrichtung nach nach zumindest einem der vorhergehenden Ansprüch, **dadurch gekennzeichnet, dass** die Tragstange (17b, 17c) teleskopartig zusammen- oder ausschiebbare Teilstangen (17ba, 17bb und 17ca, 17cb) aufweist, vorzugsweise mit oder gegen eine Federspannung.

11. Klemmvorrichtung nach nach zumindest einem der vorhergehenden Ansprüch, **dadurch gekennzeichnet, dass** die Stange ausziehbar ist, vorzugsweise gegen eine Federkraft.

12. Klemmvorrichtung nach Anspruch 10 oder 11, **dadurch gekennzeichnet, dass** die Stange aus zwei ineinander geschobenen runden oder vieleckigen Rohren besteht.

13. Klemmvorrichtung nach zumindest einem der vorhergehenden Ansprüch, **dadurch gekennzeichnet, dass** Greifschenkel (9) und Rückenschenkel (10) einen Winkel kleiner als 90° bilden insbesondere 87 bis 75°.

14. Fenster oder Tür mit der Klemmvorrichtung nach zumindest einem der vorhergehenden Ansprüch wobei zumindest ein Klemmkopf, vorzugsweise zwei Klemmköpfe, in die gegenüberliegenden Profile (1,2) der Holme der Fenster oder Tür eingreifen.
